# EUROPÄISCHE PATENTANMELDUNG

(11) **EP 2 503 130 A2**
(43) Veröffentlichungstag der Anmeldung: **26.09.2012**
(21) Anmeldenummer: 12158804.0
(22) Anmeldetag: 09.03.2012
(51) Int. Cl.: F02C 6/12, F02C 9/18

(54) **Abgasturbolader**

(30) Priorität: 21.03.2011 DE 102011005865
(71) Anmelder: MAHLE International GmbH, 70376 Stuttgart (DE)
(72) Erfinder: Gauger, Stephan, 73730 Esslingen (DE)
(74) Vertreter: BRP Renaud & Partner

(57) **Zusammenfassung**

Die vorliegende Erfindung betrifft einen Abgasturbolader (1), umfassend einen Verdichter (2) und eine Turbine (3), die durch eine Welle (4) gekoppelt sind. Erfindungswesentlich ist dabei, dass eine Verbindungsleitung (9) vorgesehen ist, derart dass eine vom Verdichter (2) komprimierte Ladeluft der Turbine (3) zuführbar ist. Die Erfindung betrifft weiter einen Verbrennungsmotor (7), der einen derartigen Abgasturbolader (1) aufweist bzw. einen Verbrennungsmotor (7), der mit einem derartigen Abgasturbolader (1) verbunden ist.

## Beschreibung

Die vorliegende Erfindung betrifft einen Abgasturbolader eines Verbrennungsmotors, insbesondere in einem Kraftfahrzeug, gemäß dem Oberbegriff des Anspruchs 1. Die Erfindung betrifft außerdem einen Verbrennungsmotor mit einem derartigen Abgasturbolader.

Abgasturbolader gehören zu einer gängigen Technik zur Leistungssteigerung von Verbrennungsmotoren. Dabei weist der Abgasturbolader eine Turbine auf, die von einem Abgas des Verbrennungsmotors angetrieben wird. Die Turbine ist üblicherweise durch eine Welle mit einem Verdichter verbunden, wobei der Verdichter eine dem Verbrennungsmotor zuzuführende Ladeluft verdichtet und somit die Leistung des Verbrennungsmotors steigert. Nachteilig dabei ist, dass der Abgasturbolader bei niedrigen Drehzahlen des Verbrennungsmotors, bedingt durch die geringe Abgasmenge, langsam oder träge auf einen erhöhten Leistungsbedarf des Verbrennungsmotors reagiert und ein langsames Ansprechverhalten zeigt.

Die vorliegende Erfindung beschäftigt sich daher mit dem Problem, für einen Abgasturbolader der gattungsgemäßen Art, eine verbesserte oder zumindest alternative Ausführungsform anzugeben, die insbesondere zu einer Verbesserung des Ansprechverhaltens des Abgasturboladers und somit des Verbrennungsmotors bei niedrigen Drehzahlen beiträgt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Abgasturbolader gemäß dem Oberbegriff des Anspruchs 1, eine Verbindungsleitung zwischen einem Verdichter und einer Turbine des Abgasturboladers vorzusehen, die eine vom Verdichter verdichtete Ladeluft zumindest teilweise direkt der Turbine zuführt. Die vom Verdichter komprimierte Ladeluft wird also vor dem Eintritt in einen Verbrennungsmotor der Turbine zugeführt und trägt somit zusätzlich zum Antrieb der Turbine bei. Die Erfindung nutzt dabei die Erkenntnis, dass der Druck stromab des Verdichters, in der Regel und insbesondere bei niedrigen Drehzahlen des Verbrennungsmotors, größer ist als der Druck stromauf der Turbine. Durch die Zuführung der vom Verdichter komprimierten Ladeluft zur Turbine, insbesondere bei Erhöhung des Leistungsbedarfs der Verbrennungsmotors und niedrigen Drehzahlen, wird also ein zusätzlicher Antrieb der Turbine geschaffen, wodurch ein verbessertes Ansprechverhalten des Abgasturboladers erzielt wird. Der Abgasturbolader reagiert also insbesondere bei den genannten Konditionen schneller auf geänderte Anforderungen durch den Verbrennungsmotor.

Bei einer weiteren Ausführungsform der erfindungsgemäßen Lösung ist die Verbindungsleitung derart ausgebildet, dass sie die Ladeluft stromab des Verdichters aus einer Ladeluftleitung abzweigt und der Turbine stromauf über eine Abgasleitung des Verbrennungsmotors zuführbar macht. Hierbei wird also der Verbrennungsmotor bei der Zuführung der vom Verdichter erzeugten Ladeluft zur Turbine umgangen. Dies dient nun insbesondere dem Zweck, das Ansprechverhalten des Abgasturboladers bei niedrigen Drehzahlen des Verbrennungsmotors, zu verbessern.

Bei einer vorteilhaften Ausführungsform der erfindungsgemäßen Lösung, zweigt die Verbindungsleitung die vom Verdichter erzeugte Ladeluft stromauf eines Ladeluftkühlers ab und führt sie der Turbine, insbesondere über eine Abgasleitung des Verbrennungsmotors, zu. Dabei befindet sich der Ladeluftkühler in der Ladeluftleitung. Diese Ausführungsform führt ebenfalls zu einem besseren Ansprechverhalten des Abgasturboladers, insbesondere bei niedrigen Drehzahlen des Verbrennungsmotors. Durch die Vermeidung der Zuführung einer stromab des Ladekühlers abgezweigten und dem heißen Abgas des Verbrennungsmotors zugeführten kalten Ladeluft, wird weiter eine thermische Beanspruchung der Verbindungsleitung bzw. der Ladeleitung und der Abgasleitung vermieden.

Bei einer weiteren Ausführungsform ist die Verbindungsleitung derart ausgebildet, dass sie die vom Verdichter erzeugte Ladeluft über eine Spirale eines Turbinengehäuses der Turbine zuführt. Die Verbindungsleitung kann also insbesondere in die Spirale des Turbinengehäuses münden.

Gemäß einer weiteren vorteilhaften Ausführungsform ist eine Ventileinrichtung in oder an der Verbindungsleitung angebracht. Die Ventileinrichtung dient dabei dem Zweck, die Zuführung der vom Verdichter erzeugten Ladeluft an die Turbine zu variieren. Die zugeführte Ladeluft wird also beispielsweise erhöht oder reduziert. Dies dient dem Zweck, die Leistung des Abgasturboladers, insbesondere an den Bedarf des Verbrennungsmotors, anzupassen. Sie trägt weiter zu einem verbesserten Ansprechverhalten des Abgasturboladers, insbesondere bei niedrigen Drehzahlen des Verbrennungsmotors, bei. Die Ventileinrichtung muss dabei nicht zwingend in oder an der Verbindungsleitung vorliegen. Es sind auch Ausführungsformen vorstellbar, die eine Ventileinrichtung direkt am Turbinengehäuse oder am Verdichtergehäuse aufweisen. Auch Ausführungsformen mit mehreren Ventileinrichtungen sind möglich und gehören daher zum Umfang der Erfindung.

Gemäß einer weiteren vorteilhaften Ausführungsform weist die Ventileinrichtung ein zyklisch schaltendes Ventil auf. Dieses kann z.B. mit einer drehbaren Steuerscheibe ausgestattet werden, die zumindest eine Durchgangsöffnung und zumindest einen Sperrbereich aufweist. Durch Drehverstellen der Steuerscheibe kann eine fluidische Verbindung zwischen zumindest einem Einlassabschnitt und zumindest einem Auslassabschnitt gesteuert werden. Eine derartige Steuerscheibe lässt sich besonders einfach rotierend oder oszillierend antreiben, so dass vergleichsweise geringe Antriebskräfte erforderlich sind und relativ kurze Schaltzeiten oder Steuerzeiten realisierbar sind. Die Verwendung eines zyklisch schaltenden Ventils ermöglicht das Absperren von Abgaspulsen und das Durchschalten von Frischluftpulsen, wenn wechselnde Druckverhältnisse vorliegen.

Die Ventileinrichtung kann ein Ventil oder alternativ mehrere Ventile aufweisen. Als Ventile seien hier ein Rückschlagventil und ein Klappenventil mit einer drehenden oder schwenkenden Klappe erwähnt. Die Ventileinrichtung kann weiter eine Membran und/oder ein Blech aufweisen. Die Verbindungsleitung kann zudem zumindest teilweise aus Metall, einem keramischen Material, einem elastischen Material oder einer Kombination davon hergestellt sein. Die Verwendung von thermisch beständigen Materialien trägt dabei zu einer Beständigkeit und verlängerten Lebensdauer der Verbindungsleitung bei. Es wird darauf hingewiesen, dass die Verbindungsleitung ein Bestandteil eines Abgasturboladergehäuses des Abgasturboladers bzw. des Turbinengehäuses der Turbine oder des Verdichtergehäuses des Verdichters sein kann. Die Verbindungsleitung kann dabei insbesondere durch ein Fräs- oder Gussverfahren in das entsprechende Gehäuse bzw. in die entsprechenden Gehäuse eingearbeitet sein.

Entsprechend einer weiteren vorteilhaften Ausführungsform der erfindungsgemäßen Lösung ist eine Steuereinrichtung vorgesehen, die derart ausgebildet bzw. ausgestattet ist, dass sie die Zuführung der vom Verdichter komprimierten Ladeluft zur Turbine, die die Turbine zusätzlich zum Abgas des Verbrennungsmotor oder ausschließlich antreibt, ändert. Diese Änderung kann dabei insbesondere eine Abhängigkeit von einer Leistungsanforderung am Verbrennungsmotor bzw. einer Leistungsanforderung des Verbrennungsmotors an den Abgasturbolader aufweisen. Alternativ oder zusätzlich kann die Steuerung eine der Turbine zugeführte Ladeluftmenge des Verdichters beispielsweise abhängig von einer Abgasmenge des Abgases des Verbrennungsmotors ändern. Dabei wird die der Turbine zugeführte Ladeluftmenge vorzugsweise erhöht, wenn die Abgasmenge abnimmt und/oder die der Turbine zugeführte Ladeluftmenge wird reduziert, wenn die Abgasmenge zunimmt. Dies führt insbesondere bei niedrigen Drehzahlen des Verbrennungsmotors und gleichzeitiger Steigerung der Leistungsanforderung am Verbrennungsmotor bzw. Abgasturbolader zu einem verbesserten Ansprechverhalten und somit zur Umgehung des sogenannten "Turbolochs".

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

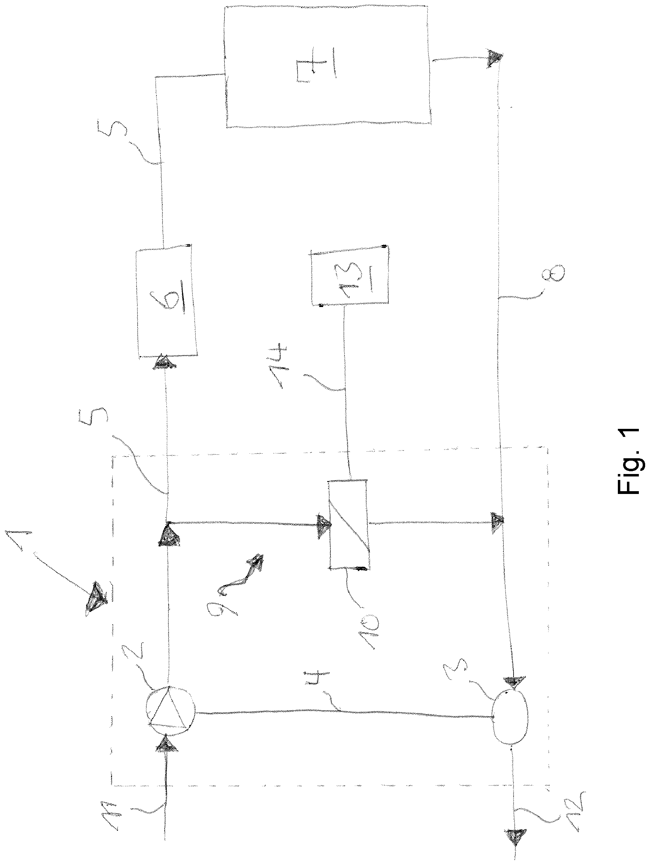

Die einzige Fig. 1 zeigt eine schematische, stark vereinfachte, schaltplanartige Prinzipdarstellung eines erfindungsgemäßen Verbrennungsmotors mit einem erfindungsgemäßen Abgasturbolader.

Entsprechend der Fig. 1, umfasst ein Abgasturbolader 1 eines Verbrennungsmotors 7 einen Verdichter 2 und eine Turbine 3, die mittels einer Welle 4 drehfest miteinander gekoppelt sind. Der hier gezeigte Abgasturbolader 1 weist weiter eine Ladeluftleitung 5 auf, die eine vom Verdichter 2 verdichtete Ladeluft über einen Ladeluftkühler 6 zum Verbrennungsmotor 7 führt. Ein vom Verbrennungsmotor 7 ausgestoßenes Abgas wird über eine Abgasleitung 8 der Turbine 3 zugeführt. Der Abgasturbolader 1 weist weiter eine Verbindungsleitung 9 auf, die durch eine Kopplung mit der Ladeluftleitung 5 stromab des Verdichters 2 und stromauf des Ladeluftkühlers 6, das heißt zwischen Verdichter 2 und Ladeluftkühler 6 und eine weitere Verbindung mit der Abgasleitung 8 stromab des Verbrennungsmotors 7 und stromauf der Turbine 3, das heißt zwischen Verbrennungsmotor 7 und Turbine 3, eine Verbindung zwischen Verdichter 2 und Turbine 3 herstellt. Der Abgasturbolader 1 weist weiter eine Ventileinrichtung 10 auf, die in die Verbindungsleitung 9 integriert ist. Eine Luftleitung 11 ist stromauf des Verdichters 2, das heißt vor dem Verdichter 2, mit diesem gekoppelt und dient insbesondere der Versorgung des Verdichters 2 und somit des Verbrennungsmotors 7 mit Luft. Eine Abgasausgangsleitung 12 ist stromab der Turbine 3, das heißt nach der Turbine 3, mit dieser gekoppelt und dient insbesondere der Abfuhr von Abgas von der Turbine 3 und somit vom Verbrennungsmotor 7. Eine Steuerungseinrichtung 13 ist weiter durch eine Verbindung 14 mit der Ventileinrichtung 10 gekoppelt.

Die vom Verdichter 2 des Abgasturboladers 1 verdichtete Ladeluft ist damit, über die Ladeluftleitung 5 und der Verbindungsleitung 9 und der Abgasleitung 8, der Turbine 3 zuführbar. Die Entnahme der Ladeluft kann sowohl vor dem Ladeluftkühler 6 als auch danach erfolgen. Eine somit der Turbine 3 zugeführte Ladeluftmenge wird über die Ventileinrichtung 10 bedarfsgerecht variiert.

Die Ventileinrichtung 10 weist vorzugsweise ein zyklisch schaltendes Ventil auf. Dieses kann z.B. mit einer drehbaren Steuerscheibe ausgestattet werden, die zumindest eine Durchgangsöffnung und zumindest einen Sperrbereich aufweist. Durch Drehverstellen der Steuerscheibe kann eine fluidische Verbindung zwischen zumindest einem Einlassabschnitt und zumindest einem Auslassabschnitt gesteuert werden. Eine derartige Steuerscheibe lässt sich besonders einfach rotierend oder oszillierend antreiben, so dass vergleichsweise geringe Antriebskräfte erforderlich sind und relativ kurze Schaltzeiten oder Steuerzeiten realisierbar sind. Die Verwendung eines zyklisch schaltenden Ventils ermöglicht das Absperren von Abgaspulsen und das Durchschalten von Frischluftpulsen, wenn wechselnde Druckverhältnisse vorliegen.

Diese Variation kann insbesondere über die Steuerungseinrichtung 13 beeinflusst werden. Somit kann ein Ansprechverhalten bzw. eine Reaktionszeit des Abgasturboladers 1, insbesondere bei niedrigen Drehzahlen des Verbrennungsmotors 7 und somit einer geringen Abgasmenge, verbessert werden.

## Patentansprüche

1. Abgasturbolader (1) eines Verbrennungsmotors (7), insbesondere in einem Kraftfahrzeug, umfassend einen Verdichter (2) zum Verdichten der dem Verbrennungsmotor (7) zuzuführenden Ladeluft und eine Turbine (3), die von einem Abgasstrom des Verbrennungsmotors (7) angetrieben ist, **dadurch gekennzeichnet,**
**dass** eine Verbindungsleitung (9) vorgesehen ist, über welche zumindest ein Teil der vom Verdichter (2) verdichteten Ladeluft direkt der Turbine (3) des Abgasturboladers (1) zuführbar ist.

2. Abgasturbolader nach Anspruch 1,
**dadurch gekennzeichnet,**
**dass** die Verbindungsleitung (9) stromab des Verdichters (2) aus einer Ladeluftleitung (5) abzweigt und stromauf der Turbine (3) in eine Abgasleitung (8) mündet und dabei den Verbrennungsmotor (7) umgeht.

3. Abgasturbolader nach Anspruch 1,
**dadurch gekennzeichnet,**
**dass** die Verbindungsleitung (9) in eine Spirale eines Turbinengehäuses der Turbine (3) mündet.

4. Abgasturbolader nach einem der Ansprüche 1 bis 3,
**dadurch gekennzeichnet,**
**dass** die Verbindungsleitung (9) aus Metall, einem keramischen Material, einem elastischen Material oder einer Kombination davon hergestellt ist.

5. Abgasturbolader nach einem der Ansprüche 1 bis 4,
**dadurch gekennzeichnet,**
**dass** die Verbindungsleitung (9) eine Ventileinrichtung (10) aufweist.

6. Abgasturbolader nach Anspruch 5,
**dadurch gekennzeichnet,**
**dass** die Ventileinrichtung (10) ein Rückschlagventil, ein Klappenventil mit einer drehenden oder schwenkenden Klappe oder eine Membran aufweist.

7. Abgasturbolader nach zumindest einem der Ansprüche 2 bis 6,
**dadurch gekennzeichnet,**
**dass** die Verbindungsleitung (9) stromauf eines Ladeluftkühlers (6) aus der Ladeluftleitung (5) abzweigt.

8. Abgasturbolader nach zumindest einem der Ansprüche 1 bis 6,
**dadurch gekennzeichnet,**
**dass** eine Steuereinrichtung (13) vorgesehen ist, die derart ausgebildet ist, dass sie die Zuführung der die Turbine (3) antreibenden Ladeluftmenge in Abhängigkeit einer Leistungsanforderung am Verbrennungsmotor (7) steuert.

9. Abgasturbolader nach einem der Ansprüche 2 bis 8,
**dadurch gekennzeichnet,**
**dass** der Verdichter (2) ein Spiralverdichter ist.

10. Abgasturbolader nach Anspruch 5,
**dadurch gekennzeichnet,**
**dass** die Ventileinrichtung (10) ein zyklisch schaltendes Ventil aufweist, das das Absperren von Abgaspulsen und das Durchschalten von Frischluftpulsen ermöglicht, wenn wechselnde Druckverhältnisse vorliegen.

11. Verbrennungsmotor (7) mit einem Abgasturbolader (1) nach einem der Ansprüche 1 bis 10.
